# EUROPÄISCHE PATENTANMELDUNG

(11) **EP 4 624 349 A2**
(43) Veröffentlichungstag der Anmeldung: **01.10.2025**
(21) Anmeldenummer: 25196468.0
(22) Anmeldetag: 30.05.2022
(51) Int. Cl.: B65B 9/04

(54) **VERFAHREN UND VERPACKUNGSMASCHINE ZUM HERSTELLEN UND PRÜFEN VON BLISTERPACKUNGEN**

(62) Teilanmeldung aus: 22176050.7
(71) Anmelder: Uhlmann Pac-Systeme GmbH & Co. KG, 88471 Laupheim (DE)
(72) Erfinder: RUF, Andreas, 88471 Laupheim (DE); HAAGA, Stefan, 88471 Laupheim (DE); MILLER, Jochen, 88471 Laupheim (DE); RIEKENBRAUCK, Jörg, 88471 Laupheim (DE)
(74) Vertreter: Wächter, Jochen

(57) **Zusammenfassung**

Eine erfindungsgemäße Verpackungsmaschine (2) zum Herstellen von Blisterpackungen (4) umfasst eine Prüfvorrichtung (28) mit mindestens einer Erfassungseinrichtung (32, 36), die dazu ausgebildet ist, einzelne Blisterpackungen (4) optisch zu erfassen, wobei die Prüfvorrichtung (28) dazu eingerichtet ist, in einem Prüfbereich (34) die Blisterpackungen (4) mittels der mindestens einen Erfassungseinrichtung (32, 36) sowohl von einer Oberseite (4b) als auch von einer Unterseite (4c) optisch zu erfassen. Das erfindungsgemäße Verfahren zeichnet sich durch das Erfassen der Oberseite (4b) und Unterseite (4c) der zumindest einen Blisterpackung (4) im Prüfbereich (34) mittels der mindestens einen optischen Erfassungseinrichtung (32, 36) aus.

## Beschreibung

Die vorliegende Erfindung betrifft eine Verpackungsmaschine zum Herstellen von Blisterpackungen sowie ein Verfahren zum Herstellen von Blisterpackungen mittels einer solchen Verpackungsmaschine sowie Prüfen der Blisterpackungen in der Verpackungsmaschine.

Eine Blisterpackung weist üblicherweise mindestens einen in einer Formfolie ausgebildeten Blisternapf zur Aufnahme eines Produkts auf. Der mindestens eine Blisternapf kann mittels einer Deckfolie verschlossen sein, die in der Regel an die Formfolie gesiegelt ist. Das Herstellen solcher Blisterpackungen umfasst beispielsweise das Formen einer Vielzahl von Blisternäpfen in eine Formfolienbahn, das Füllen zumindest eines Produkts in jeden Blisternapf, das Siegeln einer Deckfolienbahn an die Formfolienbahn und das Stanzen von Blisterpackungen aus dem Folienverbund aus Formfolienbahn und Deckfolienbahn.

Blisterpackungen werden häufig zur Verpackung von medizinischen oder pharmazeutischen Produkten sowie von Nahrungs- und Nahrungsergänzungsmitteln verwendet. Sowohl die verpackten Produkte als auch die Verpackungen unterliegen dabei hohen Qualitätsstandards.

Es ist beispielsweise bekannt, die zu verpackenden Produkte vor, während oder nach dem Füllprozess auf Unversehrtheit zu prüfen und ihre Farbe, geometrischen Eigenschaften oder ihre Zusammensetzung zu erfassen, um sicherzustellen, dass nur die richtigen Produkte unversehrt verpackt werden. Außerdem ist es bekannt, nach dem Füllprozess zu prüfen, ob in jedem Blisternapf ein Produkt enthalten ist, um nur vollständig gefüllte Blisterpackungen weiter zu verarbeiten. Um die hohen Qualitätsstandards zu erfüllen, kann es jedoch wünschenswert sein, die Blisterpackungen abgesehen von ihrer korrekten Befüllung möglichst umfassend zu prüfen.

Es ist daher eine Aufgabe der vorliegenden Erfindung, eine Verpackungsmaschine sowie ein Verfahren zum Herstellen von Blisterpackungen bereitzustellen, die platzsparend und kostengünstig eine möglichst umfassende Prüfung von Blisterpackungen ermöglichen.

Diese Aufgabe wird durch den Gegenstand des Anspruchs 1 bzw. 10 gelöst. Bevorzugte Ausführungsformen sind Gegenstand der abhängigen Ansprüche.

Eine erfindungsgemäße Verpackungsmaschine umfasst eine Trennvorrichtung zum Heraustrennen einzelner Blisterpackungen aus einer Formfolienbahn, wobei jede Blisterpackung mindestens einen in der Formfolie ausgebildeten Blisternapf umfasst, der vorzugsweise durch eine Deckfolie verschlossen ist. Weiterhin umfasst die Verpackungsmaschine eine Prüfvorrichtung mit mindestens einer Erfassungseinrichtung, die dazu ausgebildet ist, einzelne Blisterpackungen optisch zu erfassen, wobei die Prüfvorrichtung dazu eingerichtet ist, in einem Prüfbereich die Blisterpackungen mittels der mindestens einen Erfassungseinrichtung sowohl von einer Oberseite als auch von einer Unterseite optisch zu erfassen, sowie eine Transportvorrichtung zum Bewegen der Blisterpackungen in eine Transportrichtung durch die Prüfvorrichtung.

Auf diese Art und Weise kann die Prüfvorrichtung, die in der Verpackungsmaschine hinter der Trennvorrichtung angeordnet ist, platzsparend in die Verpackungsmaschine integriert werden und ermöglicht durch das Erfassen sowohl der Oberseite als auch der Unterseite, insbesondere der gesamten Oberseite und der gesamten Unterseite, der Blisterpackungen eine möglichst umfassende Prüfung derselben.

Bevorzugt umfasst die Verpackungsmaschine weiterhin eine Formvorrichtung zum Formen der Blisternäpfe in die Formfolienbahn. Bei den Blisternäpfen handelt es sich allgemein um eine Vertiefung bzw. Kavität in der Formfolienbahn, die zur Aufnahme zumindest eines Produkts ausgebildet ist. Die Größe und Form der Blisternäpfe kann beliebig gewählt werden, insbesondere unter Berücksichtigung der Größe und Form des zumindest einen Produkts, und ist nicht auf bestimmte Größen und Formen beschränkt. Die Formfolienbahn kann aus einem thermoplastischen Kunststoff bestehen, wobei die Blisternäpfe dann durch Thermoformen gebildet werden. Die Verpackungsmaschine kann in diesem Fall eine Heizvorrichtung zum Erwärmen der Formfolienbahn umfassen, die der Formvorrichtung vorgeschaltet ist.

Vorzugsweise umfasst die Verpackungsmaschine zudem eine Füllvorrichtung zum Füllen zumindest eines Produkts in jeden Blisternapf. Bei den Produkten handelt es sich bevorzugt um medizinische oder pharmazeutische Produkte, um Nahrungs- oder Nahrungsergänzungsmittel, die in Form von Tabletten, Kapseln, Dragees oder dergleichen vorliegen können. Bei den Produkten kann es sich aber auch um bereits verpackte Liquida-Produkte handeln, wie z.B. Fläschchen, Vials, Spritzen und dergleichen.

Vorzugsweise ist jeder Blisternapf durch die Deckfolie verschlossen, die mit der Formfolie verbunden ist. Dies ist insbesondere bei Produkten wie Tabletten, Kapseln, Dragees und dergleichen von Vorteil. Die Verpackungsmaschine kann hierzu eine Siegelvorrichtung zum Siegeln einer Deckfolienbahn an die Formfolienbahn umfassen. Bei anderen Produkten, wie z.B. Fläschchen, Vials, Spritzen und dergleichen, muss nicht unbedingt eine Deckfolie vorgesehen sein. In diesem Fall können die Blisterpackungen auch einen Deckel aufweisen oder ohne Deckel in eine Umverpackung verpackt werden.

Die Formfolienbahn und die Deckfolienbahn bilden nach dem Verbinden einen Folienverbund. Die Trennvorrichtung ist dann zum Heraustrennen einzelner Blisterpackungen aus dem Folienverbund eingerichtet. Die Trennvorrichtung ist vorzugsweise als Stanzvorrichtung zum Stanzen einzelner Blisterpackungen aus der Formfolienbahn bzw. aus dem Folienverbund ausgebildet. Die Formvorrichtung, die Füllvorrichtung und die Siegelvorrichtung sind bevorzugt in der Verpackungsmaschine in dieser Reihenfolge vor der Trenn- bzw. Stanzvorrichtung angeordnet.

Die Transportvorrichtung ist dazu ausgebildet, die Blisterpackungen in einer Transportebene in Transportrichtung zu bewegen. Die Oberseite einer jeden Blisterpackung ist dabei bezüglich der Transportebene nach oben gerichtet und die Unterseite einer jeden Blisterpackung ist dabei bezüglich der Transportebene nach unten gerichtet. Ein umlaufender Rand jeder Blisterpackung ist vorzugsweise in einer Ebene parallel zur Transportebene angeordnet. In einer bevorzugten Ausführungsform ist die Oberseite der Blisterpackungen durch die Deckfolie und die Unterseite der Blisterpackungen durch die Formfolie gebildet, wobei grundsätzlich auch eine umgekehrte Anordnung denkbar ist.

Die mindestens eine optische Erfassungseinrichtung ist vorzugsweise dazu eingerichtet, zumindest eine Blisterpackung vollständig zu erfassen. Die Prüfvorrichtung und die Transportvorrichtung sind daher vorzugsweise derart ausgebildet, dass sie die zumindest eine Blisterpackung im Prüfbereich vollständig freilegen, also nicht verdecken. Dadurch kann die mindestens eine Erfassungseinrichtung die zumindest eine Blisterpackung vollständig erfassen, sodass diese bestmöglich geprüft werden kann.

Die Prüfvorrichtung ist bevorzugt dazu eingerichtet, zumindest eine Stanzqualität jeder Blisterpackung zu prüfen. Insbesondere kann die Prüfvorrichtung dazu eingerichtet sein, zumindest eines aus einer Länge der Blisterpackung, einer Breite der Blisterpackung, einer Kantenlänge von Längs- und/oder Querkanten der Blisterpackung, einem Radius zwischen den Längs- und Querkanten der Blisterpackung, einer Position zumindest eines Blisternapfs der Blisterpackung relativ zu einer Längs- und/oder Querkante oder eine Kombination daraus zu prüfen. Ferner kann die Prüfvorrichtung dazu eingerichtet sein, eine Kontur der Blisterpackung, eine Position einer Perforation der Blisterpackung, eine Prägung, einen Aufdruck, eine Füllung der Blisternäpfe oder eine Kombination daraus zu prüfen. Hierzu umfasst die Prüfvorrichtung vorzugsweise eine Datenverarbeitungseinrichtung, wie weiter unten näher beschrieben, die die von der mindestens einen Erfassungseinrichtung erfassten Bilddaten verarbeitet und darauf basierend die für die Prüfung erforderlichen Größen ermittelt.

Die mindestens eine Erfassungseinrichtung ist zum optischen Erfassen der Blisterpackungen eingerichtet und kann daher auch als optische Erfassungseinrichtung bezeichnet werden. Bei der mindestens einen Erfassungseinrichtung kann es sich grundsätzlich um einen optischen Sensor, insbesondere zur Bilderfassung, handeln wie z.B. um eine Kamera.

In einer Ausführungsform umfasst die Prüfvorrichtung genau eine Erfassungseinrichtung, die über oder unter der Transportvorrichtung angeordnet ist, sowie Reflexionsmittel, wie z.B. Spiegel und/oder Prismen. Die Erfassungseinrichtung kann die ihr zugewandte Seite der Blisterpackungen direkt optisch erfassen. Die Reflexionsmittel sind derart angeordnet und ausgebildet, dass die Erfassungseinrichtung mittels der Reflexionsmittel auch die von der Erfassungseinrichtung abgewandte Seite der Blisterpackungen optisch erfassen kann.

In einer bevorzugten Ausführungsform der vorliegenden Erfindung umfasst die Prüfvorrichtung jedoch eine Mehrzahl von Erfassungseinrichtungen, wobei die Mehrzahl von Erfassungseinrichtungen zumindest eine erste Erfassungseinrichtung und eine zweite Erfassungseinrichtung umfasst, wobei die erste Erfassungseinrichtung dazu eingerichtet ist, die Oberseite der Blisterpackungen optisch zu erfassen und die zweite Erfassungseinrichtung dazu eingerichtet ist, die Unterseite der Blisterpackungen optisch zu erfassen. Bevorzugt ist daher die erste Erfassungseinrichtung oberhalb der Transportvorrichtung angeordnet und die zweite Erfassungseinrichtung unterhalb der Transportvorrichtung angeordnet. Dies ermöglicht zum einen einen einfachen und platzsparenden Aufbau der Prüfvorrichtung. Zum anderen können sowohl die Oberseite als auch die Unterseite der Blisterpackungen direkt und somit zuverlässig von der jeweiligen Erfassungseinrichtung optisch erfasst werden.

Die zuvor beschriebene mindestens eine Erfassungseinrichtung kann die erste Erfassungseinrichtung, die zweite Erfassungseinrichtung oder eine andere Erfassungseinrichtung der Mehrzahl von Erfassungseinrichtungen sein. Grundsätzlich können die hierin bezüglich der mindestens einen Erfassungseinrichtung beschriebenen Merkmale sowohl auf die erste als auch auf die zweite Erfassungseinrichtung zutreffen und umgekehrt.

Die erste und die zweite Erfassungseinrichtung sind vorzugsweise dazu eingerichtet, die Oberseite und die Unterseite zumindest einer Blisterpackung gleichzeitig oder sequentiell zu erfassen. Bevorzugt werden die Oberseite und die Unterseite der Blisterpackung dabei in derselben Position der Blisterpackungen erfasst.

Die erste und die zweite Erfassungseinrichtung können übereinander angeordnet sein, wobei die Transportvorrichtung zwischen der ersten und der zweiten Erfassungseinrichtung hindurch verläuft. Insbesondere sind die erste und die zweite Erfassungseinrichtung in einer Richtung senkrecht zur Transportebene und zur Transportrichtung übereinander angeordnet. Die Blisterpackungen werden folglich mittels der Transportvorrichtung zwischen der ersten und der zweiten Erfassungseinrichtung hindurch gefördert. Der Prüfbereich ist zwischen der ersten und der zweiten Erfassungseinrichtung angeordnet. Hierdurch ist es besonders einfach möglich, die Oberseite und die Unterseite jeder Blisterpackung gleichzeitig zu erfassen. Zugleich wird ein platzsparender Aufbau der Prüfvorrichtung parallel zur Transportrichtung möglich.

Um die Oberseite und die Unterseite der zumindest einen Blisterpackung vollständig zu erfassen, ist es weiterhin vorteilhaft, wenn die Prüfvorrichtung im Prüfbereich eine transparente Ablageeinrichtung umfasst, auf der die zumindest eine von der mindestens einen Erfassungseinrichtung zu erfassende Blisterpackung im Prüfbereich anordenbar ist. Die mindestens eine Erfassungseinrichtung, insbesondere die zweite Erfassungseinrichtung, kann unter der Ablageeinrichtung angeordnet sein und die Unterseite der zumindest einen Blisterpackung durch die transparente Ablageeinrichtung hindurch vollständig erfassen. Unabhängig davon kann die Ablageeinrichtung als Scheibe oder Platte, zum Beispiel aus Glas oder Kunststoff, ausgebildet sein. Die Dimensionen der Ablageeinrichtung in einer Ebene parallel zur Transportrichtung sind mindestens so groß und vorzugsweise größer als die Dimension einer Blisterpackung in dieser Ebene, sodass die zumindest eine im Prüfbereich angeordnete Blisterpackung vollständig erfassbar ist. Beispielsweise kann die Ablageeinrichtung in einem Fördertisch vorgesehen sein, auf dem die Blisterpackungen von der Transportvorrichtung bewegt werden.

Die Ablageeinrichtung bietet weiterhin den Vorteil, dass die zumindest eine Blisterpackung im Prüfbereich auf der Ablageeinrichtung angeordnet ist und somit von dieser getragen wird. Folglich muss die zumindest eine Blisterpackung im Prüfbereich nicht von der Transportvorrichtung gehalten werden, was wiederum ermöglicht, die zumindest eine Blisterpackung durch die Transportvorrichtung freizugeben, sodass der umlaufende Rand der Blisterpackung vollständig frei liegt.

Die Transportvorrichtung verläuft bevorzugt über die Ablageeinrichtung. Die Transportvorrichtung kann daher dazu eingerichtet sein, die zumindest eine Blisterpackung in den Prüfbereich zu bewegen und im Prüfbereich zumindest kurzzeitig freizugeben.

Die Transportvorrichtung umfasst bevorzugt mindestens ein umlaufendes Zugmittel, das ein oberes und ein unteres Trum aufweist, die in einer Richtung senkrecht zur Transportebene beabstandet zueinander angeordnet sind. Das obere und das untere Trum verlaufen parallel zur Transportebene. Das mindestens eine umlaufende Zugmittel kann beispielsweise als Riemen, insbesondere als Zahn- oder Keilrippenriemen, oder als Kette ausgebildet sein und mittels eines Antriebs angetrieben sein.

Ein besonders platzsparender Aufbau der Prüfvorrichtung bzw. der Verpackungsmaschine kann dadurch ermöglicht werden, dass die mindestens eine Erfassungseinrichtung, vorzugsweise die zweite Erfassungseinrichtung, zwischen dem oberen und dem unteren Trum des mindestens einen Zugmittels angeordnet ist. Dabei ist es ausreichend, wenn die mindestens eine Erfassungseinrichtung auf einer Höhe angeordnet ist, die zwischen der Höhe des oberen Trums der Höhe des unteren Trums liegt. Es ist nicht zwingend erforderlich, dass die mindestens eine Erfassungseinrichtung teilweise oder vollständig zwischen dem oberen Trum und dem unteren Trum des Zugmittels aufgenommen ist, wie insbesondere aus der nachfolgenden Beschreibung der Transportvorrichtung deutlich wird.

In einer bevorzugten Ausführungsform umfasst die Transportvorrichtung eine Mehrzahl von Aufnahmen, die in Transportrichtung hintereinander angeordnet sind. Jede Aufnahme ist dazu eingerichtet, zumindest eine Blisterpackung aufzunehmen. Vorzugsweise kann in jeder Aufnahme parallel zur Transportrichtung nur genau eine Blisterpackung aufgenommen werden. In einer Richtung senkrecht zur Transportrichtung und parallel zur Transportebene können gegebenenfalls mehrere Blisterpackungen nebeneinander angeordnet sein. Die Transportvorrichtung ist folglich dazu ausgebildet, eine Reihe von Blisterpackungen oder mehrere Reihen von Blisterpackungen, die parallel zur Transportrichtung hintereinander angeordnet sind, durch die Prüfvorrichtung zu bewegen.

Die Mehrzahl von Aufnahmen kann zwischen einem ersten Zustand, in dem sie die zumindest eine Blisterpackung halten, und einem zweiten Zustand, in dem sie die zumindest eine Blisterpackung freigeben, verstellbar sein. Z.B. sind die Aufnahmen derart ausgebildet, dass sie Blisterpackungen form- oder kraftschlüssig halten, beispielsweise durch Klemmen der Blisterpackungen in der jeweiligen Aufnahme. Um die Blisterpackungen zur möglichst umfassenden Prüfung im Prüfbereich freizugeben, wie oben erwähnt, befinden sich die Aufnahmen der Mehrzahl von Aufnahmen im Prüfbereich im zweiten Zustand. Genauer befinden sich die Aufnahmen im Prüfbereich zumindest zeitweise im zweiten Zustand. Im Prüfbereich können die Aufnahmen zwischen dem ersten und dem zweiten Zustand verstellt werden. Dadurch können im ersten Zustand der Aufnahmen Blisterpackungen in den Prüfbereich und aus dem Prüfbereich bewegt werden. Im zweiten Zustand kann die mindestens eine Erfassungseinrichtung die zumindest eine Blisterpackung optisch erfassen.

Grundsätzlich kann die Transportvorrichtung auf unterschiedliche Art und Weise ausgebildet sein. Beispielsweise kann die Transportvorrichtung Schlitten umfassen, die in Transportrichtung bewegbar sind und die jeweils eine Aufnahme für zumindest eine Blisterpackung aufweisen. Die Transportvorrichtung kann auch Saugvorrichtungen umfassen, die jeweils zumindest eine Blisterpackung erfassen, oder Greifeinrichtung zum Greifen jeweils einer Blisterpackung umfassen.

Bevorzugt umfasst die Transportvorrichtung eine Mehrzahl von Aufnahmeelementen, wobei jeweils ein vorauseilendes Aufnahmeelement und ein nacheilendes Aufnahmeelement der Mehrzahl von Aufnahmeelementen eine Aufnahme der Mehrzahl von Aufnahmen für zumindest eine Blisterpackung bilden. Dadurch liegt die Transportvorrichtung, insbesondere die Aufnahmeelemente, an einem vorderen und einem hinteren Rand der zumindest einen Blisterpackung an, sodass sie die Oberseite und die Unterseite der Blisterpackung im Gegensatz zu Saug- oder Greifeinrichtungen nicht bzw. nicht wesentlich bedecken. Im Allgemeinen sind die Mehrzahl von Aufnahmeelementen dazu ausgebildet, die Blisterpackungen in den Aufnahmen in Transportrichtung formschlüssig zu halten. Außerdem lässt sich die Transportrichtung in diesem Fall auf einfache Art und Weise derart ausbilden, dass die Oberseite, die Unterseite und der umlaufende Rand der Blisterpackungen im Prüfbereich überhaupt nicht durch die Transportvorrichtung bzw. Komponenten derselben verdeckt werden.

Damit die Transportvorrichtung die Blisterpackungen einfach und ungehindert aufnehmen und zugleich sicher transportieren kann ist es bevorzugt, dass jeweils ein vorauseilendes Aufnahmeelement und ein nacheilendes Aufnahmeelement parallel zur Transportrichtung relativ zueinander beweglich sind, um die jeweilige Aufnahme zu öffnen und zu schließen. In einer geöffneten ersten Stellung des vorauseilenden und des nacheilenden Aufnahmeelements ist ein Abstand zwischen dem vorauseilenden Aufnahmeelement und dem nacheilenden Aufnahmeelement parallel zur Transportrichtung größer als in einer geschlossenen zweiten Stellung. In der ersten Stellung ist der Abstand zwischen dem vorauseilenden und dem nacheilenden Aufnahmeelement zudem größer als eine Dimension der Blisterpackungen parallel zur Transportrichtung. Die erste Stellung der Aufnahmeelemente entspricht dem ersten Zustand der jeweiligen Aufnahme und die zweite Stellung der Aufnahmeelemente entspricht dem zweiten Zustand der jeweiligen Aufnahme.

Vorzugsweise ist die Transportvorrichtung dazu eingerichtet, die Aufnahme im Prüfbereich zu öffnen, um den umlaufenden Rand der zumindest einen Blisterpackung freizulegen. Hierzu werden die Aufnahmeelemente in die erste Stellung bzw. die Aufnahmen in den zweiten Zustand gestellt. So ist eine beidseitige Prüfung der vollständigen Blisterpackung besonders einfach möglich.

In einem Ausführungsbeispiel umfasst die Transportvorrichtung mindestens zwei umlaufendes Zugmittel, genauer zumindest ein erstes und ein zweites Zugmittel, die im Wesentlichen parallel zueinander verlaufen. Das erste Zugmittel kann mittels eines ersten Antriebs angetrieben sein und das zweite Zugmittel kann mittels eines zweiten Antriebs angetrieben sein.

Alle vorauseilenden Aufnahmeelemente der Mehrzahl von Aufnahmeelementen können am ersten Zugmittel festgelegt sein und alle nacheilenden Aufnahmeelemente der Mehrzahl von Aufnahmeelementen können am zweiten Zugmittel festgelegt sein. Mittels des ersten und des zweiten Antriebs lässt sich die Geschwindigkeit des ersten und des zweiten Zugmittels und folglich der Aufnahmeelemente einstellen. Ist eine Relativgeschwindigkeit zwischen dem ersten und im zweiten Zugmittel gleich null, bleibt der Abstand zwischen den vorauseilenden Aufnahmeelementen und den nacheilenden Aufnahmeelementen im Wesentlichen konstant. Wird eine Relativgeschwindigkeit zwischen dem ersten und dem zweiten Zugmittel erzeugt, ändert sich der Abstand zwischen den vorauseilenden Aufnahmeelementen und den nacheilenden Aufnahmeelementen entsprechend.

Die Mehrzahl von Aufnahmeelementen kann in Form von Leisten, Schiebern oder dergleichen ausgebildet sein, die an den Zugmitteln festgelegt sind. Die Aufnahmeelemente können in einer Richtung senkrecht zur Transportrichtung und parallel zur Transportebene über das mindestens eine Zugmittel hinausragen und die Aufnahmen für die Blisterpackungen seitlich neben dem mindestens einen Zugmittel bilden. Die Blisterpackungen werden dadurch im Prüfbereich nicht durch das mindestens eine Zugmittel verdeckt. In diesem Fall kann die mindestens eine Erfassungseinrichtung auf einer Höhe zwischen dem oberen und dem unteren Trum des mindestens einen Zugmittels aber seitlich zu diesem versetzt angeordnet sein.

Um die Blisterpackungen basierend auf den von der mindestens einen Erfassungseinrichtung generierten Daten zu Prüfen, kann die Prüfvorrichtung weiterhin eine Datenverarbeitungseinrichtung zur Bildverarbeitung umfassen, wobei die Datenverarbeitungseinrichtung kommunizierend mit der mindestens einen Erfassungseinrichtung in Verbindung steht. Die mindestens eine Erfassungseinrichtung erfasst Bilddaten der zumindest einen Blisterpackung, die von der Datenverarbeitungseinrichtung verarbeitet und ausgewertet werden, um die gewünschten Informationen über die Blisterpackung zu erhalten. Eine besonders kostengünstige Lösung kann erreicht werden, wenn die Datenverarbeitungseinrichtung in eine Steuereinrichtung der Prüfvorrichtung oder der Verpackungsmaschine integriert wird.

Neben der Steuereinrichtung umfasst die Verpackungsmaschine bevorzugt weiterhin eine Ausschleusvorrichtung zum Ausschleusen von Blisterpackungen aus der Verpackungsmaschine. Die Steuereinrichtung ist kommunizierend mit der Datenverarbeitungseinrichtung verbunden oder integral mit dieser ausgebildet und die Ausschleusvorrichtung ist kommunizierend mit der Steuereinrichtung verbunden. Die Steuereinrichtung ist dazu eingerichtet, die Ausschleusvorrichtung in Reaktion auf ein Signal der Datenverarbeitungseinrichtung anzusteuern. So ist es möglich, Blisterpackungen, die ein vorgegebenes Qualitätskriterium nicht erfüllen, basierend auf der Prüfung durch die Prüfvorrichtung auszuschleusen und dadurch zu verhindern, dass diese im weiteren Verlauf verpackt werden.

Ein erfindungsgemäßes Verfahren zum Herstellen von Blisterpackungen mittels einer Verpackungsmaschine und zum Prüfen der Blisterpackungen in der Verpackungsmaschine umfasst die folgenden Schritte:
Heraustrennen einzelner Blisterpackungen aus einer Formfolienbahn, wobei jede Blisterpackung mindestens einen in der Formfolie ausgebildeten Blisternapf umfasst, der vorzugsweise durch eine Deckfolie verschlossen ist;
Aufnehmen und Bewegen zumindest einer Blisterpackung in einen Prüfbereich mittels einer Transportvorrichtung;
Erfassen einer Oberseite und einer Unterseite der zumindest einen Blisterpackung im Prüfbereich mittels mindestens einer optischen Erfassungseinrichtung;
Bewegen der zumindest einen Blisterpackung aus dem Prüfbereich mittels der Transportvorrichtung.

Auf diese Art und Weise kann jede Blisterpackung direkt nach dem Heraustrennen, insbesondere nach dem Ausstanzen, durch das Erfassen sowohl der Oberseite als auch der Unterseite der Blisterpackung umfassend geprüft werden, bevor sie die Verpackungsmaschine verlässt und vorzugsweise auch bevor sie in der Verpackungsmaschine weiterverarbeitet, beispielsweise verpackt, wird.

Das erfindungsgemäße Verfahren wird vorzugsweise mittels der erfindungsgemäßen Verpackungsmaschine durchgeführt. Alle bezüglich der Verpackungsmaschine und ihrer Komponenten, wie der Prüfvorrichtung und der Transportvorrichtung, beschriebenen Merkmale treffen daher analog und im Wesentlichen unabhängig von der weiteren Ausbildung der Verpackungsmaschine auf das Verfahren zu und umgekehrt. Insbesondere lassen sich die hierin beschriebenen Funktionen der Verpackungsmaschine und ihrer Bestandteile auch als Verfahrensschritte des erfindungsgemäßen Verfahrens definieren.

Sofern nicht anders beschrieben, erfolgen die Schritte des Verfahrens in der jeweils angegebenen Reihenfolge.

Vorzugsweise ist jeder Blisternapf durch die Deckfolie verschlossen und das Heraustrennen der Blisterpackungen erfolgt aus einem Folienverbund aus der Formfolienbahn und einer Deckfolienbahn. Das Verfahren kann dann vor dem Heraustrennen das Verbinden der Formfolienbahn und der Deckfolienbahn, insbesondere das Siegeln der Deckfolienbahn an die Formfolienbahn, umfassen.

Um eine möglichst umfassende Prüfung der Blisterpackungen zu ermöglichen, ist es bevorzugt, dass das Verfahren vor dem Erfassen der Oberseite und der Unterseite der zumindest einen Blisterpackung weiterhin den Schritt umfasst:
Freigeben der zumindest einen Blisterpackung durch die Transportvorrichtung im Prüfbereich, besonders bevorzugt derart, dass der umlaufende Rand der zumindest einen Blisterpackung freiliegt und von der mindestens einen Erfassungseinrichtung erfasst werden kann.

Vorzugsweise werden die Blisterpackungen in einem Aufnahmebereich von der Transportvorrichtung aufgenommen, mittels der Transportvorrichtung in den Prüfbereich bewegt, im Prüfbereich von der Transportvorrichtung freigegeben, von der Erfassungseinrichtung erfasst und wieder von der Transportvorrichtung aufgenommen, mittels der Transportvorrichtung in einen Abgabebereich bewegt und dort von der Transportvorrichtung freigegeben.

Grundsätzlich kann das Aufnehmen und Freigeben der Blisterpackungen durch Öffnen und Schließen der Mehrzahl von Aufnahmen der Transportvorrichtung durch Verstellen derselben zwischen dem ersten und dem zweiten Zustand erfolgen, wie oben bezüglich der Transportvorrichtung beschrieben.

Genauer umfasst die Transportvorrichtung die Mehrzahl von Aufnahmeelementen, wobei jeweils ein vorauseilendes Aufnahmeelement und ein nacheilendes Aufnahmeelement der Mehrzahl von Aufnahmeelementen eine Aufnahme für die zumindest eine Blisterpackung bilden. Das Aufnehmen und das Freigeben der zumindest einen Blisterpackung erfolgt durch die Relativbewegung zwischen dem vorauseilenden und dem nacheilenden Aufnahmeelement der Mehrzahl von Aufnahmeelementen, wobei sich beim Aufnehmen der Abstand zwischen dem vorauseilenden und dem nacheilenden Aufnahmeelement verkleinert und beim Freigeben der Abstand zwischen dem vorauseilenden und dem nacheilenden Aufnahmeelement vergrößert. Auf diese Weise kann die zumindest eine Blisterpackung aufgenommen und zuverlässig in den Prüfbereich bewegt werden und dort zur möglichst umfassenden Prüfung einfach freigegeben werden.

Bevorzugt ist im Prüfbereich die transparente Ablageeinrichtung vorgesehen und die Transportvorrichtung bewegt die zumindest eine Blisterpackung auf die Ablageeinrichtung und ordnet sie auf der Ablageeinrichtung im Prüfbereich an. Die mindestens eine Erfassungseinrichtung, insbesondere die zweite Erfassungseinrichtung, kann die zumindest eine Blisterpackung im Prüfbereich dann durch die Ablageeinrichtung hindurch optisch erfassen. Die zumindest eine Blisterpackung auf der Ablageeinrichtung kann von der Transportvorrichtung freigegeben werden, um auch den umlaufenden Rand derselben gut prüfen zu können, während zugleich die erste und die zweite Erfassungseinrichtung die Oberseite und die Unterseite der Blisterpackung optisch erfassen können, vorzugsweise ohne weitere Reflexionsmittel oder dergleichen.

Üblicherweise werden die Blisternäpfe von oben in die Formfolienbahn eingebracht und befüllt und die Deckfolienbahn wird der Formfolienbahn von oben zugeführt und an diese gesiegelt. Nach dem Stanzen liegen daher zunächst Blisterpackungen vor, deren Blisternäpfe nach unten gerichtet sind und deren Oberseite durch die Deckfolie gebildet ist. Bevorzugt wird diese Orientierung beibehalten, um einen einfachen Aufbau der Verpackungsmaschine zu ermöglichen. Folglich liegt im Prüfbereich die Formfolie, insbesondere im Bereich der Blisternäpfe, auf der Ablageeinrichtung auf und die Deckfolie ist nach oben gewandt.

In einer bevorzugten Ausführungsform wird die Oberseite der zumindest einen Blisterpackung mittels der ersten Erfassungseinrichtung erfasst und gleichzeitig die Unterseite der zumindest einen Blisterpackung mittels der zweiten Erfassungseinrichtung erfasst. Dadurch können die Genauigkeit der Prüfung erhöht und ein platzsparender Aufbau der Prüfvorrichtung ermöglicht werden.

Die mindestens eine Erfassungseinrichtung gewinnt vorzugsweise Bilddaten der Oberseite und der Unterseite der zumindest einen Blisterpackung. Um aus den Bilddaten wiederum Erkenntnisse über die Qualität, insbesondere die Stanzqualität, der Blisterpackungen zu erhalten, umfasst das Verfahren bevorzugt das Verarbeiten der von der mindestens einen Erfassungseinrichtung gewonnenen Bilddaten mittels der Datenverarbeitungseinrichtung sowie das Ableiten zumindest eines Qualitätsmerkmals der zumindest einen Blisterpackung basierend auf der Bildverarbeitung. Das Qualitätsmerkmal kann beispielsweise eine Dimension der Blisterpackung, eine Position des mindestens einen Blisternapfs, insbesondere bezüglich der Ränder der Blisterpackung, oder eine Füllung des mindestens einen Blisternapfs sein. Weitere Größen bzw. Qualitätsmerkmale, die die Prüfungsvorrichtung prüfen kann, sind eingangs bezüglich der Prüfvorrichtung beschrieben.

Besonders effizient kann das Verfahren gestaltet werden, wenn Blisterpackungen unzureichender Qualität unmittelbar ausgeschleust und nicht weiterverarbeitet werden. Das Verfahren umfasst daher bevorzugt das Ausschleusen der zumindest einen Blisterpackung, falls das zumindest eine Qualitätsmerkmal einem vorbestimmten Kriterium nicht entspricht, und das Weiterverarbeiten der zumindest einen Blisterpackung, falls das zumindest eine Qualitätsmerkmal dem vorbestimmten Kriterium entspricht. Das vorbestimmte Kriterium kann beispielsweise ein Toleranzbereich sein, in dem bestimmte Dimensionen der Blisterpackung oder eine Position des mindestens einen Blisternapfs liegen soll. Das vorbestimmte Kriterium kann z.B. auch dann erfüllt sein, wenn jeder Blisternapf mit einem Produkt gefüllt ist.

Weitere Merkmale und Vorteile der vorliegenden Erfindung ergeben sich aus der nachfolgenden Beschreibung unter Bezugnahme auf die beigefügten Zeichnungen.
- Fig. 1: zeigt schematisch eine Verpackungsmaschine mit Prüfvorrichtung.
- Fig. 2: zeigt die Prüfvorrichtung einer erfindungsgemäßen Verpackungsmaschine in einer perspektivischen Ansicht.
- Fig. 3: zeigt die Prüfvorrichtung nach Fig. 2 in einer Seitenansicht.

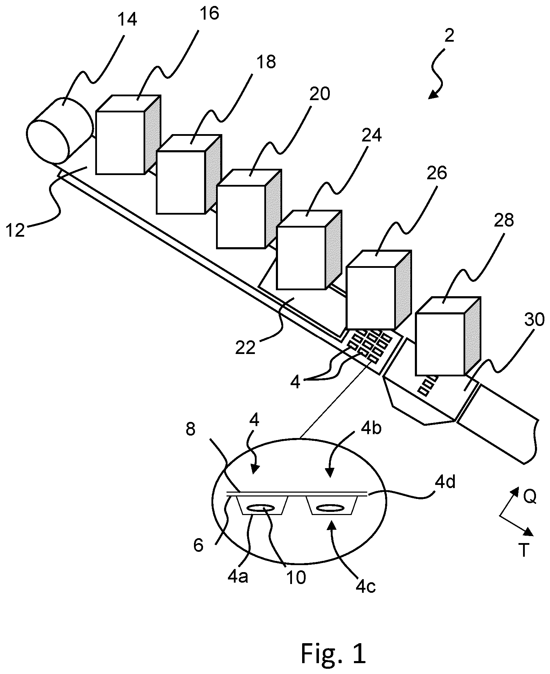

In Fig. 1 ist eine Verpackungsmaschine 2 zum Herstellen von Blisterpackungen 4 sowie eine Detailansicht einer Blisterpackung 4 schematisch dargestellt. Jede Blisterpackung 4 umfasst mindestens einen in einer Formfolie 6 ausgebildeten Blisternapf 4a, der wahlweise durch eine Deckfolie 8 verschlossen ist. Aufgrund des Herstellungsprozesses ist eine Oberseite 4b der Blisterpackung 4 dann üblicherweise durch die Deckfolie 8 und eine Unterseite 4c der Blisterpackung 4 durch die Formfolie 6 mit den Blisternäpfen 4a gebildet. In jedem Blisternapf 4a der Blisterpackung 4 ist ein Produkt 10, insbesondere ein medizinisches oder pharmazeutisches Produkt, wie eine Tablette, eine Kapsel, ein Dragee oder dergleichen aufgenommen. Es sind aber auch Blisterpackungen 4 denkbar, die keine Deckfolie 8 aufweisen. Für diese Ausführungsformen sind die hierin beschriebenen Merkmale bzgl. der Deckfolie 8 bzw. des Verbindens derselben mit der Formfolie 6 als optional anzusehen.

In der dargestellten Ausführungsform ist die Verpackungsmaschine 2 als Blistermaschine mit einer Mehrzahl von Bearbeitungsstationen bzw. -vorrichtungen ausgebildet, wie nachfolgend beschrieben. Es versteht sich, dass die vorliegende Erfindung jedoch nicht auf eine solche Blistermaschine beschränkt ist.

Die Formfolie 6 kann eine thermoplastische Folie sein, in der die Blisternäpfe 4a durch Thermoformen gebildet werden. Die Formfolie 6 kann in Form einer Formfolienbahn 12 vorzugsweise auf einer Vorratsrolle 14 bereitgestellt werden. Die Verpackungsmaschine 2 kann eine Heizvorrichtung 16 zum Erwärmen der Formfolienbahn 12 sowie eine Formvorrichtung 18 zum Formen der Blisternäpfe 4a in die Formfolienbahn 12 umfassen. In einer Füllvorrichtung 20 der Verpackungsmaschine 2 können die Produkte 10 in die Blisternäpfe 4a gefüllt werden. Anschließend können die Blisternäpfe 4a verschlossen werden, vorzugsweise durch Siegeln einer Deckfolienbahn 22 an die Formfolienbahn 12 in einer Siegelvorrichtung 24 der Verpackungsmaschine 2. Die Deckfolie 8 ist folglich in Form der Deckfolienbahn 22 bereitgestellt, vorzugsweise ebenfalls auf einer Vorratsrolle (nicht dargestellt), die der Formfolienbahn 12 von oben zugeführt wird.

Weiterhin umfasst die Verpackungsmaschine 2 eine Trennvorrichtung 26 zum Heraustrennen der einzelnen Blisterpackungen 4 aus der Formfolienbahn 12, vorzugsweise aus dem Folienverbund aus Formfolienbahn 12 und Deckfolienbahn 22. Die Trennvorrichtung 26 ist vorzugsweise als Stanzvorrichtung ausgebildet. Nach der Trennvorrichtung 26 liegen die Blisterpackungen 4 vereinzelt vor und werden mittels einer Übergabeeinrichtung (nicht dargestellt), wie zum Beispiel sogenannten Pickern, weiteren Verarbeitungsschritten zugeführt. Die Orientierung der Blisterpackungen 4, insbesondere der Ober- und der Unterseite 4b, 4c, bleibt dabei vorzugsweise unverändert. Es versteht sich, dass die Blisterpackungen 4 auf beliebige Art und Weise hergestellt werden können.

Die erfindungsgemäße Verpackungsmaschine 2 umfasst weiterhin eine Prüfvorrichtung 28 zum Prüfen der Blisterpackungen 4, insbesondere der vereinzelten Blisterpackungen 4 nach der Trennvorrichtung 26, sowie eine Transportvorrichtung 30 zum Bewegen der Blisterpackungen 4 in eine Transportrichtung T durch die Prüfvorrichtung 28.

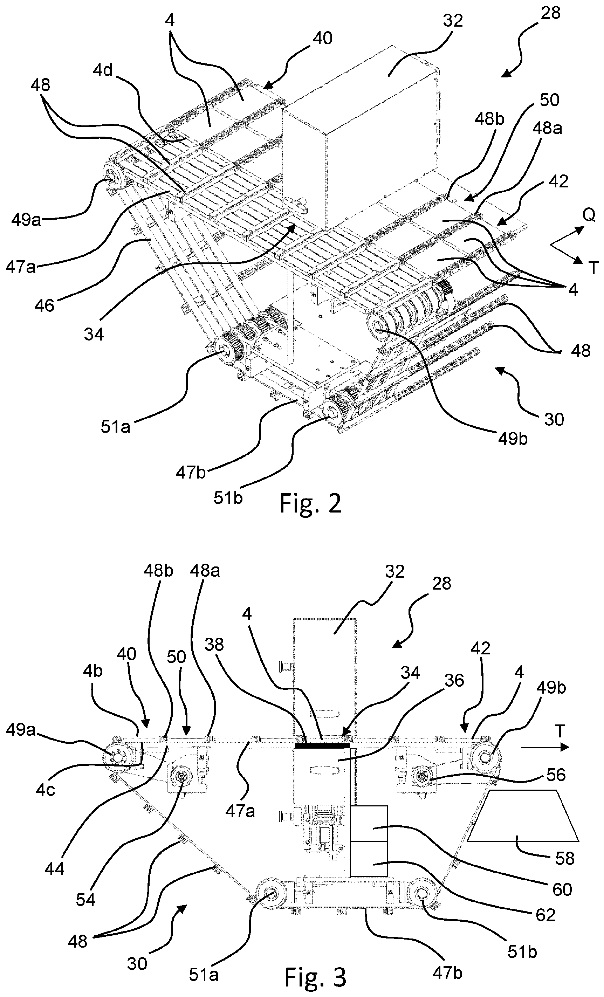

Die Prüfvorrichtung 28 und die Transportvorrichtung 30 werden nachfolgend unter Bezugnahme auf Fig. 2 und Fig. 3 näher beschrieben. Die Prüfvorrichtung 28 umfasst mindestens eine Erfassungseinrichtung 32, die dazu ausgebildet ist, in einen Prüfbereich 34 der Verpackungsmaschine 2 einzelne Blisterpackungen 4 sowohl von einer Oberseite 4b als auch von einer Unterseite 4c optisch zu erfassen. Hierzu kann die Prüfvorrichtung 28 Reflexionsmittel umfassen, mittels derer die Erfassungseinrichtung 32 nicht nur die ihr zugewandte Oberseite 4b sondern auch die Unterseite 4c der Blisterpackungen 4 erfassen kann. In der dargestellten, bevorzugten Ausführungsform umfasst die Prüfvorrichtung 28 jedoch eine Mehrzahl von Erfassungseinrichtungen, genauer die Erfassungseinrichtung 32, die auch als erste Erfassungseinrichtung bezeichnet wird, sowie eine zweite Erfassungseinrichtung 36. Jede der Mehrzahl von Erfassungseinrichtungen 32, 36 kann beispielsweise eine Kamera umfassen.

Die erste Erfassungseinrichtung 32 erfasst hier die Oberseite 4b der Blisterpackungen 4 optisch und die zweite Erfassungseinrichtung 36 erfasst die Unterseite 4c der Blisterpackungen 4 optisch. Dabei ist es bevorzugt, dass die Erfassungseinrichtungen 32, 36 die Oberseite 4a und die Unterseite 4c der Blisternäpfe 4 direkt optisch erfassen, weshalb die erste und die zweite Erfassungseinrichtung 32, 36 auf die Oberseite 4a bzw. die Unterseite 4c gerichtet sind. Die erste Erfassungseinrichtung 32 kann hierzu über der Transportvorrichtung 30 bzw. dem Prüfbereich 34 angeordnet sein und die zweite Erfassungseinrichtung 36 kann unter der Transportvorrichtung 30 bzw. dem Prüfbereich 34 angeordnet sein. Es ist bevorzugt, dass die erste und die zweite Erfassungseinrichtung 32, 36 die jeweilige Blisterpackung 4 gleichzeitig erfassen, wozu die Erfassungseinrichtungen 32, 36 übereinander angeordnet sein können und die Transportvorrichtung 30 zwischen der ersten und der zweiten Erfassungseinrichtung 32, 36 hindurch verläuft. Der Prüfbereich 34 ist folglich zwischen der ersten und der zweiten Erfassungseinrichtung 32, 36 angeordnet. Andere Zu- bzw. Anordnungen sowie weitere Erfassungseinrichtungen sind denkbar.

Um jede Blisterpackung 4 möglichst vollständig erfassen und prüfen zu können, sollten die Oberseite 4b, die Unterseite 4c und ein umlaufender Rand 4b jeder Blisterpackung 4 im Prüfbereich 34 möglichst frei liegen, also nicht verdeckt sein. Die Prüfvorrichtung 28 umfasst daher bevorzugt im Prüfbereich 34 eine transparente Ablageeinrichtung 38, auf der die jeweils zu erfassende Blisterpackung 4 im Prüfbereich 34 angeordnet ist. Die zweite Erfassungseinrichtung 36 kann die Unterseite 4c der zu erfassenden Blisterpackung 4 durch die transparente Ablageeinrichtung 38 hindurch erfassen. Zudem kann die jeweils zu erfassende Blisterpackung 4 im Prüfbereich 34 auf der Ablageeinrichtung 38 aufliegen, sodass sie dort nicht von der Transportvorrichtung 30 gehalten werden muss, sondern zur Freigabe des umlaufenden Rands 4d der Blisterpackung 4 von der Transportvorrichtung 30 freigegeben werden kann.

Die Transportvorrichtung 30 bewegt die Blisterpackungen 4 grundsätzlich in Transportrichtung T in einer Transportebene, wobei bevorzugt die Oberseite 4b jeder Blisterpackung 4 bezüglich der Transportebene nach oben gerichtet ist und die Unterseite 4c jeder Blisterpackung 4 bezüglich der Transportebene nach unten gerichtet ist. Die Transportvorrichtung 30 kann die Blisterpackungen 4 in einem Aufnahmebereich 40 der Transportvorrichtung 30 aufnehmen, beispielsweise durch Übergabe der Blisterpackungen 4 von der Trennvorrichtung 26 an die Transportvorrichtung 30 mittels einer geeigneten Übergabeeinrichtung. Dann kann die Transportvorrichtung 30 die Blisterpackungen 4 vom Aufnahmebereich 40 in den Prüfbereich 34 und vom Prüfbereich 34 in einen Abgabebereich 42 bewegen, von dem sie an weitere Transport- oder Bearbeitungsvorrichtungen übergeben werden können. Die Transportvorrichtung 30 verläuft über die Ablageeinrichtung 34. Die Ablageeinrichtung 34 ist beispielsweise in einem Fördertisch 44 vorgesehen, auf dem die Blisterpackungen 4 von der Transportvorrichtung 30 bewegt werden. Grundsätzlich kann die Transportvorrichtung 30 Greif- oder Saugeinrichtungen umfassen, um die Blisterpackungen 4 zu halten und zu bewegen. Derartige Einrichtungen würden jedoch auch die Oberseite 4b oder die Unterseite 4c der Blisterpackungen 4 zumindest teilweise verdecken.

Bevorzugt umfasst die Transportvorrichtung 30 daher mindestens ein umlaufendes erstes Zugmittel 46, beispielsweise in Form eines Riemens, an dem eine Mehrzahl von Aufnahmeelementen 48 angebracht sind, die in Transportrichtung T hintereinander angeordnet sind. Die Aufnahmeelemente 48 können leistenförmig ausgebildet sein. Jeweils ein vorauseilendes Aufnahmeelement 48a und ein nacheilendes Aufnahmeelement 48b bilden eine Aufnahme 50 für zumindest eine Blisterpackung 4. Die Mehrzahl von Aufnahmeelementen 48 können derart ausgebildet sein, dass sie die Oberseite 4b und die Unterseite 4c der Blisterpackungen 4 nicht bzw. nicht wesentlich verdecken. Vielmehr liegen die Aufnahmeelemente 48 lediglich an einem vorderen und einem hinteren Rand der jeweiligen Blisterpackung 4 an, die an das vorauseilende bzw. nacheilende Aufnahmeelement 48a, b angrenzen. Ferner können die Aufnahmeelemente 48 die Aufnahmen 50 derart bilden, dass die Blisterpackungen 4 auch durch das mindestens eine Zugmittel 46 nicht verdeckt werden.

Vorzugsweise ist in Transportrichtung T genau eine Blisterpackung 4 in einer Aufnahme 50 aufgenommen. In einer Richtung Q senkrecht zur Transportrichtung T und in der Transportebene kann eine Mehrzahl von Blisterpackungen 4, hier zwei Blisterpackungen 4, in jeder Aufnahme 50 aufgenommen sein, wie in Fig. 2 zu sehen. In diesem Fall können die erste und die zweite Erfassungseinrichtung 32, 36 jeweils dazu eingerichtet sein, die nebeneinander angeordneten Blisterpackungen 4 optisch zu erfassen, oder es kann sowohl oberhalb als auch unterhalb des Prüfbereichs 34 jeweils eine weitere Erfassungseinrichtung vorgesehen sein.

Das mindestens eine umlaufende erste Zugmittel 46, vorzugsweise alle Zugmittel, weisen ein oberes Trum 47a und ein unteres Trum 47b auf, die in einer Richtung senkrecht zur Transportebene beabstandet zueinander angeordnet sind und parallel zur Transportebene verlaufen. Hierzu ist das mindestens eine Zugmittel 46 zumindest um eine erste und eine zweite Walze 49a, 49b geführt, deren Achsen in einer Ebene parallel zur Transportebene liegen. In der dargestellten Ausführungsform ist das mindestens eine Zugmittel 46 weiterhin über eine dritte und eine vierte Walze 51a, 51b geführt, deren Achsen in einer weiteren Ebene parallel zur Transportebene liegen. Das obere Trum 47a verläuft zwischen der ersten und der zweiten Walze 49a, 49b und das untere Trum 47b verläuft zwischen der dritten und der vierten Walze. Dadurch ist das mindestens eine Zugmittel 46 im Wesentlichen trapezförmig aufgespannt. Das obere und das untere Trum 47a, b können nun so weit voneinander beabstandet angeordnet sein, dass die zweite Erfassungseinrichtung 36 auf einer Höhe zwischen dem oberen und dem unteren Trum 47a, 47b des mindestens einen Zugmittels 46 angeordnet ist, wie dargestellt.

Die Aufnahmeelemente 48 liegen während des Transports der Blisterpackungen 4 vorzugsweise an einem vorderen und einem hinteren Rand der Blisterpackungen 4 an und überdecken die Oberseite 4b und die Unterseite 4c der Blisterpackungen 4 nicht bzw. nicht wesentlich. Eine ungehinderte Aufnahme und Freigabe der Blisterpackungen 4 kann dadurch erreicht werden, dass jeweils ein vorauseilendes Aufnahmeelement 48a und ein nacheilendes Aufnahmeelement 48b parallel zur Transportrichtung T relativ zueinander beweglich sind. Dadurch lassen sich die Aufnahmen 50 öffnen und schließen und die zumindest eine Blisterpackung 4 kann im Prüfbereich 34 einfach von der Transportvorrichtung 30 freigegeben werden, sodass auch ihr umlaufender Rand von der mindestens einen Erfassungseinrichtung 32, 36 erfassbar ist.

Im dargestellten Ausführungsbeispiel sind hierzu die vorauseilenden Aufnahmeelemente 48a mit dem ersten Zugmittel 46 verbunden und die nacheilenden Aufnahmeelemente 48b mit einem zweiten Zugmittel 52 der Transportvorrichtung 30 verbunden. Zur Erhöhung der Stabilität können auch mehrere erste und mehrere zweite Zugmittel vorgesehen sein, wie dargestellt. Das erste und das zweite Zugmittel 46, 52 verlaufen parallel zueinander. Das erste Zugmittel 46 wird von einem ersten Antrieb 54 angetrieben und das zweite Zugmittel 52 wird von einem zweiten Antrieb 56 angetrieben. Durch den ersten und den zweiten Antrieb 54, 56 lässt sich eine Relativgeschwindigkeit zwischen dem ersten und dem zweiten Zugmittel 46, 52 und somit zwischen den vorauseilenden und den nacheilenden Aufnahmeelementen 48a, 48b zum Öffnen und Schließen der Aufnahmen 50 erzeugen.

Vorzugsweise erstrecken sich die Aufnahmeelemente 48 in der Richtung Q senkrecht zur Transportrichtung T über die Zugmittel 46, 52 hinaus und bilden die Aufnahmen 50 für die Blisterpackungen 4 seitlich neben den Zugmitteln 46, 52. Dadurch wird die Unterseite 4c der Blisterpackungen 4 nicht durch die Zugmittel 46, 52 verdeckt.

Die Transportvorrichtung 30 nimmt folglich im Aufnahmebereich 40 zumindest eine Blisterpackung 4 auf, wozu die Aufnahme 50 zunächst zum Einfügen der zumindest einen Blisterpackung 4 von einem ersten Zustand in einen geöffneten zweiten Zustand verstellt wird. Durch die Relativbewegung zwischen dem vorauseilenden Aufnahmeelement 48a und dem nacheilenden Aufnahmeelement 48b wird die Aufnahmen 50 dann vom zweiten Zustand wieder in einen geschlossen ersten Zustand verstellt, in dem die Transportvorrichtung 30 die zumindest eine Blisterpackung 4 in den Prüfbereich 34 bewegt. Im Prüfbereich 34 wird die zumindest eine Blisterpackung 4 durch die Transportvorrichtung 30 bevorzugt freigegeben, sodass der umlaufende Rand 4d der Blisterpackung 4 freiliegt und die Blisterpackung 4 von der Oberseite 4b und der Unterseite 4c optisch erfasst werden kann. Das Freigeben der zumindest einen Blisterpackung 4 erfolgt erneut durch Öffnen der Aufnahme 50 in den zweiten Zustand im Prüfbereich 34. Nach dem optischen Erfassen der Blisterpackung 4 im Prüfbereich 34 wird die Aufnahme 50 wieder geschlossen und die zumindest eine Blisterpackung 4 vom Prüfbereich zum Abgabebereich 42 gefördert.

Vom Abgabebereich 42 kann die zumindest eine Blisterpackung 4 der weiteren Verarbeitung, wie zum Beispiel der Verpackung in Faltschachteln, zugeführt werden. Dies soll jedoch nur der Fall sein, wenn bei der Prüfung der zumindest einen Blisterpackung 4 durch die Prüfvorrichtung 28 eine gewünschte Qualität der Blisterpackung 4 festgestellt wird. Ist die Qualität der zumindest einen Blisterpackung 4 ungenügend, kann die Blisterpackung 4 ausgeschleust und dadurch von der Weiterverarbeitung ausgeschlossen werden. Eine Ausschleusvorrichtung 58 ist in Fig. 3 symbolisch dargestellt. Zum Beispiel werden mangelhafte Blisterpackungen 4 nicht von einer Übergabeeinrichtung erfasst, die die Blisterpackungen 4 vom Abgabebereich 42 der weiteren Verarbeitung zuführt, und fallen in einen Auffangbehälter. Alternative Ausschleusvorrichtungen 58 sind denkbar.

Zum Prüfen der Blisterpackungen 4 basierend auf den von der mindestens einen Erfassungseinrichtung 32, 36 generierten Daten umfasst die Prüfvorrichtung 28 bevorzugt eine Datenverarbeitungseinrichtung 60, die insbesondere zur Bildverarbeitung der von den Erfassungseinrichtungen 32, 36 erfassten Bilddaten eingerichtet ist und mit der mindestens einen Erfassungseinrichtung 32, 36 kommunizierend verbunden ist. Die Datenverarbeitungseinrichtung 60 verarbeitet die Bilddaten und wertet diese aus, um die gewünschten Informationen über die Qualität, insbesondere die Stanzqualität der Blisterpackungen 4 zu erhalten. Hierzu kann die Datenverarbeitungseinrichtung 60 basierend auf der Bildverarbeitung zumindest ein Qualitätsmerkmal jeder Blisterpackung ableiten und prüfen, ob das Qualitätsmerkmal einem vorbestimmten Kriterium entspricht, beispielsweise in einem vordefinierten Toleranzbereich liegt. Beispielsweise kann basierend auf Bildern der Oberseite und der Unterseite der Blisterpackungen durch geeignete Datenverarbeitung eine oder mehrere der folgenden Qualitätsmerkmale bestimmt werden: eine Länge der Blisterpackung 4, eine Breite der Blisterpackung 4, eine Kantenlänge von Längs- und/oder Querkanten der Blisterpackung 4, ein Radius zwischen den Längs- und Querkanten der Blisterpackung 4, eine Position zumindest eines Blisternapfs 4a der Blisterpackung 4 relativ zu einer Längs- und/oder Querkante, eine Kontur der Blisterpackung 4, eine Position einer Perforation der Blisterpackung 4, eine Prägung, ein Aufdruck, eine Füllung der Blisternäpfe 4a oder eine Kombination daraus.

Die Prüfvorrichtung 28 kann weiterhin eine Steuereinrichtung 62 umfassen, die kommunizierend mit der Datenverarbeitungseinrichtung 60 verbunden oder integral mit dieser ausgebildet ist. Zudem kann die Steuereinrichtung 62 mit der Ausschleusvorrichtung 58 kommunizierend verbunden sein, um diese in Reaktion auf ein Signal der Datenverarbeitungseinrichtung 60 anzusteuern. Erfüllt eine Blisterpackung 4 das vorgegebene Qualitätskriterien nicht, wird es basierend auf der Prüfung durch die Prüfvorrichtung 28 unmittelbar ausgeschleust.

Die Blisterpackungen 4 können mittels der Verpackungsmaschine 2 und des hierin beschriebenen Verfahrens nach dem Stanzen möglichst umfassend geprüft werden, indem sie sowohl von der Oberseite also auch von der Unterseite optisch erfasst werden, wobei vorzugsweise auch der umlaufende Rand der Blisterpackungen freiliegt. Dazu können die Blisterpackungen im Prüfbereich zumindest kurzzeitig freigegeben werden. Mangelhafte Blisterpackungen können unmittelbar von der weiteren Verarbeitung ausgeschlossen werden. Alternative Ausführungsformen sind dem Fachmann basierend auf den hierin beschriebenen Ausführungsbeispielen ersichtlich.

## Patentansprüche

1. Verpackungsmaschine (2) zum Herstellen von Blisterpackungen (4) umfassend:
eine Trennvorrichtung (26) zum Heraustrennen einzelner Blisterpackungen (4) aus einer Formfolienbahn (12), wobei jede Blisterpackung (4) mindestens einen in der Formfolie (6) ausgebildeten Blisternapf (4a) umfasst, der vorzugsweise durch eine Deckfolie (8) verschlossen ist;
eine Prüfvorrichtung (28) mit mindestens einer Erfassungseinrichtung (32, 36), die dazu ausgebildet ist, einzelne Blisterpackungen (4) optisch zu erfassen, wobei die Prüfvorrichtung (28) dazu eingerichtet ist, in einem Prüfbereich (34) zumindest eine Blisterpackung (4) mittels der mindestens einen Erfassungseinrichtung (32, 36) sowohl von einer Oberseite (4b) als auch von einer Unterseite (4c) optisch zu erfassen, wobei die mindestens eine optische Erfassungseinrichtung (32, 36) dazu eingerichtet ist, die zumindest eine Blisterpackung (4) vollständig zu erfassen; und
eine Transportvorrichtung (30) zum Bewegen der Blisterpackungen (4) in eine Transportrichtung (T) durch die Prüfvorrichtung (28).

2. Verpackungsmaschine (2) nach Anspruch 1, **dadurch gekennzeichnet, dass** die Prüfvorrichtung (28) eine Mehrzahl von Erfassungseinrichtungen (32, 36) umfasst, wobei die Mehrzahl von Erfassungseinrichtungen (32, 36) zumindest eine erste Erfassungseinrichtung (32) und eine zweite Erfassungseinrichtung (36) umfasst, wobei die erste Erfassungseinrichtung (32) dazu eingerichtet ist, die Oberseite (4b) der zumindest einen Blisterpackung (4) optisch zu erfassen, und die zweite Erfassungseinrichtung (36) dazu eingerichtet ist, die Unterseite (4c) der zumindest einen Blisterpackung (4) optisch zu erfassen.

3. Verpackungsmaschine (2) nach Anspruch 2, **dadurch gekennzeichnet, dass** die erste und die zweite Erfassungseinrichtung (32, 36) dazu eingerichtet sind, die Oberseite (4b) und die Unterseite (4c) der zumindest einen Blisterpackung (4) gleichzeitig zu erfassen.

4. Verpackungsmaschine (2) nach Anspruch 2 oder 3, **dadurch gekennzeichnet, dass** die erste und die zweite Erfassungseinrichtung (32, 36) übereinander angeordnet sind und die Transportvorrichtung (30) zwischen der ersten und der zweiten Erfassungseinrichtung (32, 36) hindurch verläuft.

5. Verpackungsmaschine (2) nach einem der vorangehenden Ansprüche, **dadurch gekennzeichnet, dass** die Prüfvorrichtung (28) im Prüfbereich (34) eine transparente Ablageeinrichtung (38) umfasst, auf der die zumindest eine von der mindestens einen Erfassungseinrichtung (32, 36) zu erfassende Blisterpackung (4) im Prüfbereich (34) anordenbar ist.

6. Verpackungsmaschine (2) nach einem der vorangehenden Ansprüche, **dadurch gekennzeichnet, dass** die Transportvorrichtung (30) mindestens ein umlaufendes Zugmittel (46) umfasst, das ein oberes und ein unteres Trum (47a, 47b) aufweist, die beabstandet zueinander angeordnet sind, wobei die mindestens eine Erfassungseinrichtung (32, 36) zwischen dem oberen und dem unteren Trum (47a, 47b) des mindestens einen Zugmittels (46) angeordnet ist.

7. Verpackungsmaschine (2) nach einem der vorangehenden Ansprüche, **dadurch gekennzeichnet, dass** die Transportvorrichtung (30) eine Mehrzahl von Aufnahmen (50) zur Aufnahme jeweils zumindest einer Blisterpackung (4) umfasst, wobei die Mehrzahl von Aufnahmen (50) verstellbar sind zwischen einem ersten Zustand, in dem sie die zumindest eine Blisterpackung halten, und einem zweiten Zustand, in dem sie die zumindest eine Blisterpackung freigeben, wobei sich die Mehrzahl von Aufnahmen (50) im Prüfbereich (34) im zweiten Zustand befinden.

8. Verpackungsmaschine (2) nach Anspruch 7, **dadurch gekennzeichnet, dass** die Transportvorrichtung (30) eine Mehrzahl von Aufnahmeelementen (48) umfasst, wobei jeweils ein vorauseilendes Aufnahmeelement (48a) und ein nacheilendes Aufnahmeelement (48b) der Mehrzahl von Aufnahmeelementen (48) eine Aufnahme (50) der Mehrzahl von Aufnahmen (50) bilden, wobei jeweils ein vorauseilendes Aufnahmeelement (48a) und ein nacheilendes Aufnahmeelement (48b) parallel zur Transportrichtung (T) relativ zueinander beweglich sind, um die Aufnahme (50) zwischen dem ersten und dem zweiten Zustand zu verstellen.

9. Verpackungsmaschine (2) nach einem der vorangehenden Ansprüche, **dadurch gekennzeichnet, dass** die Prüfvorrichtung (28) weiterhin eine Datenverarbeitungseinrichtung (60) zur Bildverarbeitung umfasst, wobei die Datenverarbeitungseinrichtung (60) kommunizierend mit der mindestens einen Erfassungseinrichtung (32, 36) in Verbindung steht.

10. Verfahren zum Herstellen von Blisterpackungen (4) mittels einer Verpackungsmaschine (2) und Prüfen der Blisterpackungen (4) in der Verpackungsmaschine (2) mit den folgenden Schritten:
Heraustrennen einzelner Blisterpackungen (4) aus einer Formfolienbahn (12), wobei jede Blisterpackung (4) mindestens einen in der Formfolie (6) ausgebildeten Blisternapf (4a) umfasst, der vorzugsweise durch eine Deckfolie (8) verschlossen ist;
Aufnehmen und Bewegen zumindest einer Blisterpackung (4) in einen Prüfbereich (34) mittels einer Transportvorrichtung (30);
Erfassen einer Oberseite (4b) und einer Unterseite (4c) der zumindest einen Blisterpackung (4) im Prüfbereich (34) mittels mindestens einer optischen Erfassungseinrichtung (32, 36), wobei die mindestens eine optische Erfassungseinrichtung (32, 36) die zumindest eine Blisterpackung (4) vollständig erfasst;
Bewegen der zumindest einen Blisterpackung (4) aus dem Prüfbereich (34) mittels der Transportvorrichtung (30).

11. Verfahren nach Anspruch 10, **dadurch gekennzeichnet, dass** es vor dem Erfassen der Oberseite (4b) und der Unterseite (4c) der zumindest einen Blisterpackung (4) weiterhin den Schritt umfasst:
Freigeben der zumindest einen Blisterpackung (4) durch die Transportvorrichtung (30) im Prüfbereich (34).

12. Verfahren nach Anspruch 11, **dadurch gekennzeichnet, dass** die Transportvorrichtung (30) eine Mehrzahl von Aufnahmeelementen (48) umfasst, wobei jeweils ein vorauseilendes Aufnahmeelement (48a) und ein nacheilendes Aufnahmeelement (48b) der Mehrzahl von Aufnahmeelementen (48) eine Aufnahme (50) für zumindest eine Blisterpackung (4) bilden; und
das Aufnehmen und Freigeben der zumindest einen Blisterpackung (4) durch eine Relativbewegung zwischen einem vorauseilenden und einem nacheilenden Aufnahmeelement (48a, 48b) der Mehrzahl von Aufnahmeelementen (48) erfolgt, wobei sich beim Aufnehmen der Abstand zwischen dem vorauseilenden und dem nacheilenden Aufnahmeelement (48a, 48b) verkleinert und beim Freigeben der Abstand zwischen dem vorauseilenden und dem nacheilenden Aufnahmeelement (48a, 48b) vergrößert.

13. Verfahren nach einem der Ansprüche 10 bis 12, **dadurch gekennzeichnet, dass** im Prüfbereich (34) eine transparente Ablageeinrichtung (38) vorgesehen ist;
wobei die Transportvorrichtung (30) die zumindest eine Blisterpackung (4) auf die Ablageeinrichtung (38) bewegt und auf der Ablageeinrichtung (38) im Prüfbereich (34) anordnet; und
wobei die mindestens eine Erfassungseinrichtung (32, 36) die zumindest eine Blisterpackung (4) im Prüfbereich (34) durch die Ablageeinrichtung (38) hindurch optisch erfasst.

14. Verfahren nach einem der Ansprüche 10 bis 13, **dadurch gekennzeichnet, dass** eine Mehrzahl von Erfassungseinrichtungen (32, 36) vorgesehen sind und das Erfassen der Oberseite (4b) der zumindest einen Blisterpackung (4) mittels einer ersten Erfassungseinrichtung (32) der Mehrzahl von Erfassungseinrichtungen (32, 36) erfolgt und gleichzeitig das Erfassen der Unterseite (4c) der zumindest einen Blisterpackung (4) mittels einer zweiten Erfassungseinrichtung (36) der Mehrzahl von Erfassungseinrichtungen (32, 36) erfolgt.

15. Verfahren nach einem der Ansprüche 10 bis 14, **dadurch gekennzeichnet, dass** es weiterhin die Schritte umfasst:
Verarbeiten der von der mindestens einen Erfassungseinrichtung (32, 36) gewonnenen Bilddaten mittels einer Datenverarbeitungseinrichtung (60) und Ableiten zumindest eines Qualitätsmerkmals der zumindest einen Blisterpackung (4) basierend auf der Bildverarbeitung;
Ausschleusen der zumindest einen Blisterpackung (4), falls das zumindest eine Qualitätsmerkmal einem vorbestimmten Kriterium nicht entspricht; und
Weiterverarbeiten der zumindest einen Blisterpackung (4), falls das zumindest eine Qualitätsmerkmal dem vorbestimmten Kriterium entspricht.
